# EUROPÄISCHE PATENTSCHRIFT

(11) **EP 3 875 909 B1**
(45) Veröffentlichungstag und Bekanntmachung des Hinweises auf die Patenterteilung: **23.02.2022**
(21) Anmeldenummer: 20161070.6
(22) Anmeldetag: 05.03.2020
(51) Int. Cl.: G01C 21/32, G01C 21/00, G05D 1/02

(54) **ERZEUGEN EINER NEUEN HYBRIDEN KARTE ZUR NAVIGATION**
GENERATION OF A NEW HYBRID MAP FOR NAVIGATION
CRÉATION D'UNE NOUVELLE CARTE DE NAVIGATION HYBRIDE

(43) Veröffentlichungstag der Anmeldung: 08.09.2021
(73) Patentinhaber: SICK AG, 79183 Waldkirch (DE)
(72) Erfinder: Steder, Bastian, 79112 Freiburg (DE); Schopp, Patrick, 79112 Freiburg (DE); Fischer, Fabian, 79312 Emmendingen (DE)

(56) Entgegenhaltungen:
- DE-A1-102006 037 334
- DE-A1-102017 215 868
- US-A1- 2007 260 628
- US-A1- 2016 275 667
- US-A1- 2017 121 158

## Beschreibung

Die Erfindung betrifft ein Verfahren und eine Vorrichtung zum Erzeugen einer neuen hybriden Karte durch Erweitern und/oder Verändern einer ersten hybriden Karte mit einer zweiten hybriden Karte nach dem Oberbegriff von Anspruch 1 beziehungsweise 13.

Ein herkömmliches Navigationsverfahren für fahrerlose Transportfahrzeuge (AGV, Automated Guided Vehicle) basiert auf einer Spurführung durch eine physische Spur oder Leitlinie. Die Spur ist beispielsweise als optisch erfassbares Band oder als magnetisches Band auf den Boden geklebt oder in den Boden eingelassen und wird mittels geeigneter Sensorik detektiert, etwa einer Kamera oder einem Hall-Sensor. Ein solcher Spurführungssensor gibt den jeweiligen Abstands zur Mitte der Spur aus, und mit dieser Information wird die Fahrt derart geregelt, dass das Fahrzeug kontinuierlich der Spur folgt.

In Ergänzung der Spuren werden in einigen Fällen Zusatzmarkierungen verwendet, die an bestimmten Positionen Steuersignale an das Fahrzeug übermitteln, etwa um die Fahrt zu verlangsamen oder in eine bestimmte Richtung abzubiegen. Derartige Zusatzmarkierungen fungieren häufig als Positionscodes mit einer absoluten Positionsangabe in der Fahrzeugsteuerung bekannten Koordinaten. Zusatzmarkierungen werden entlang der Spur auf den Boden oder darin eingelassen. Das Fahrzeug verfügt über einen Codeleser in zu dem Zusatzcode passender Technologie, also einen optischen Codeleser für einen Barcode oder 2D-Code oder einen RFID-Leser für ein RFID-Tag.

In den Boden eingelassene Spuren können nur mit hohem Aufwand verändert werden und kommen deshalb immer seltener zum Einsatz. Aufgeklebte Spuren lassen sich zwar einfacher verändern, sind jedoch einer hohen Belastung während des Betriebs der Anlage ausgesetzt. Durch Abnutzung und Verschmutzung kann es dann zu Fehlsteuerungen kommen, beziehungsweise das Fahrzeug ist nicht mehr in der Lage, auf der vorgegebenen Spur weiterzufahren, bis die Defekte durch Servicepersonal behoben sind.

Alternativ zu einer Spurführung sind Navigationsverfahren bekannt, die auf einer berührungslosen Konturerfassung der Umgebung basieren. Die natürlichen Konturen, an denen sich das Fahrzeug orientiert und lokalisiert, können überall oder an kritischen Stellen durch eigens angebrachte Reflektoren ergänzt oder ersetzt werden. Eine erforderliche Karte mit Konturinformationen der Umgebung wird entweder vorab erstellt oder entsteht während des Navigierens (SLAM, Simultaneous Localisation and Mapping). Hier muss das Fahrzeug mittels Pfadplanung selbständig seinen Weg finden. Das ist weitaus komplexer und aufwändiger als das oben genannte Verfahren mit Spurführung. Bei Störungen der Pfadplanung ist der Einsatz von geschultem Fachpersonal notwendig.

Um die Vorteile der Flexibilität der freien Navigation mit der einfachen Pfadplanung der Spurführung zu kombinieren, werden im Stand der Technik Navigationssysteme vorgeschlagen, die als virtuelle Spurführungssysteme bezeichnet werden können. Dabei fährt das Fahrzeug in einer Einlern- oder Umstellungsphase eine physische Spur ab und erzeugt sich eine Karte der Umgebung. Die Spur merkt sich das System virtuell als Fahrbahn oder Trajektorie. In einer dann spurfreien Betriebsphase navigiert das Fahrzeug anhand einer Konturvermessung der Umgebung und der Karte auf der vorgegebenen Trajektorie, so dass die ehemals physische Spur nun als virtuelle Spur wirkt. Das weitere Schicksal der physischen Spur ist dann ohne Belang. Dieses Vorgehen hat den Charme einer besonders einfachen Umrüstung, da die vorhandene physische Spur übernommen wird. Das virtuelle Spurführungssystem kann sogar die gleichen Steuerbefehle an die Fahrzeugsteuerung geben wie zuvor der ersetzte Spurführungssensor. Zusatzcodes können beim Einlernen ebenfalls erfasst und durch virtuelle Zusatzcodes an deren Positionen ersetzt werden.

Ein derartiges virtuelles Spurführungssystem ist beispielsweise in der nachveröffentlichten deutschen Patentanmeldung mit dem Aktenzeichen 10 2019 123 659.2 beschrieben. Aus der EP 3 167 342 B1 ist ein virtuelles Spurfolge- und Umrüstverfahren für autonome Fahrzeuge bekannt. Die EP 2 818 954 A2 offenbart ein fahrerloses Transportfahrzeug und ein Verfahren zum Planen einer virtuellen Spur. Dabei wird jedoch die virtuelle Spur von Anfang an nur auf einem Computer geplant. Die WO 2018/051081 A1 befasst sich mit der Anpassung eines spurfolgenden AGV.

Nun ergeben sich immer wieder Situationen, in denen die Karte veraltet ist. Beispielsweise haben sich Fahrwege verändert, insbesondere durch nachträgliches Editieren einer virtuellen Spur, es sind neue Gebiete hinzugekommen, Reflektoren ausgefallen oder zusätzlich aufgehängt worden, neue Zusatzcodes angebracht worden oder die Umgebung hat sich im Vergleich zu der ursprünglich kartierten Konturinformation erheblich verändert.

Es ist bekannt, die Karte neu aufzunehmen. Die Neuaufnahme bringt jedoch viel Aufwand mit sich, da die komplette Umgebung neu abgefahren werden muss und jegliche manuelle Veränderungen der Karte verloren gehen beziehungsweise wiederholt werden müssen. Außerdem kann sich das Koordinatensystem verändern, womit die vom Nutzer gespeicherten Positionen ungültig werden und neu zu bestimmen sind. Manche Verfahren aktualisieren alternativ ihre Karte fortlaufend. Das verteilt aber letztlich die genannten Nachteile lediglich auf kleinere Schritte.

Die US 2007/0260628 A1 offenbart eine virtuelle Datenbankumgebung zum Erzeugen digitaler Karteninformation. Dabei werden Daten verschiedener Drittparteien miteinander zu einer gemeinsamen Karte verknüpft. Die einzelnen Datenquellen können verschiedenste Merkmale bereitstellen, insbesondere geographische Daten, aber auch Informationen über Adressen, Transportnetze, Wasserflächen, politische Bezirke, Bevölkerungsdaten, Geschäfte und Unterhaltungsstätten. In einer Ausführungsform werden eine erste Karte mit geographischen Informationen wie Straßen, Parks und dergleichen und eine zweite Karte mit Restaurantinformationen und Bewertungen kombiniert.

Die DE 10 2017 215 868 A1 befasst sich mit einem Verfahren zum Erstellen einer Karte. Es wird mit einer ersten Umfeldsensorik und einer dazu nicht baugleichen zweiten Umfeldsensorik ein Umgebungsmerkmal erfasst und dazu eine Objektklasse bestimmt. Die Position des Umgebungsmerkmals ist in einer ersten Karte hinterlegt, und daraus kann ein automatisiertes Fahrzeug seine eigene Position finden. Das Umgebungsmerkmal kann auch von einer zweiten Karte umfasst sein. Die Karten umfassen mehrere Kartenschichten, beispielsweise eine Karte aus der Vogelperspektive, eine Radarkarte, eine Lidarkarte und eine Karte mit Umgebungsmerkmalen, und in einer Ausführungsform entspricht die erste und/oder zweite Karte jeweils einer Kartenschicht.

In der US 2017/01 21158 A1 werden eindeutige Landmarken verwendet, um in einer Anlaufphase die Position industrieller Fahrzeuge zu bestimmen.

Aus der US 2016/0275667 A1 ist ein Verfahren zur Positionsbestimmung bekannt. Dabei werden Konturen aus der Umgebung vermessen und daraus Geometriemerkmale extrahiert, die mit einer als Fingerabdruckdatenbank gespeicherten Sammlung von bekannten Konturen abgeglichen werden. Es können mehrere bekannte Konturen probiert werden, und die Position wird anhand einer bekannten Kontur der Fingerabdruckdatenbank ermittelt, wenn dazu ein Übereinstimmungsgrad hoch genug ist.

Die DE 10 2006 037 334 A1 offenbart ein Verfahren zum Zusammenführen von Kartendaten, die Informationen über Topologie, Geometrie, Namen, Straßenklassen und dergleichen enthalten. Es werden verschiedene Varianten vorgestellt, wie die Informationen aus einer Karte A und einer Karte B in eine Kombinations-Karte K übernommen werden, etwa ausgehend von einer leeren Karte, der Karte A oder der Karte B. Ein weiterer Vorschlag ist, in Teilgebieten wahlweise von Karte A oder Karte B auszugehen. In Überlappungsgebieten erfolgt eine vorzugsweise automatische Zuordnung zwischen den Karten A und B, die bei Bedarf manuell nachgearbeitet wird.

Es ist daher Aufgabe der Erfindung, die Aktualisierung einer Karte zum Navigieren eines Fahrzeugs zu verbessern.

Diese Aufgabe wird durch ein Verfahren und eine Vorrichtung zum Erzeugen einer neuen hybriden Karte durch Erweitern und/oder Verändern einer ersten hybriden Karte mit einer zweiten hybriden Karte nach Anspruch 1 beziehungsweise 13 gelöst. Ein Fahrzeug, insbesondere ein autonomes Fahrzeug (AGV, automated guided vehicle) verwendet die hybride Karte zur Eigenlokalisierung beim Navigieren längs einer vorgegebenen Trajektorie, die durch eine Spur vorgegeben wird. Eine erste hybride Karte ist eine ursprüngliche Karte, die beispielsweise aus einer Teilkartierung stammt oder die bereits für eine gewisse Betriebsphase Verwendung gefunden hat. Diese erste hybride Karte wird nun mit Hilfe einer zweiten hybriden Karte modifiziert. Dabei kann ein Bereich hinzugefügt werden, den die erste hybride Karte nicht abgedeckt hat, es ist ein Bereich neu vermessen worden, oder die zweite Karte trägt eine Kombination aus beidem bei. Eine neu hybride Karte entsteht aus einer Vereinigung der ersten und zweiten hybriden Karte. Entsprechend können eine dritte und weitere hybride Karte schrittweise hinzugefügt werden.

Eine hybride Karte enthält mehrere Informationskategorien, die von unterschiedlichen Sensoren stammen können. Die hybride Karte weist demnach Informationen unterschiedlichen Typs auf. Eine der Informationskategorien betrifft die Spur oder die zu fahrende Trajektorie des Fahrzeugs. Eine weitere Informationskategorie betrifft die Umgebungskontur der Spur, die insbesondere bei einer Kartierungsfahrt längs der Spur mit einem Konturerfassungssensor aufgenommen wird.

Die Erfindung geht von dem Grundgedanken aus, eine Möglichkeit zu schaffen, mit der die hybride Karte nicht vollständig ausgetauscht wird. Stattdessen werden die Informationskategorien getrennt nach verschiedenen Regeln aktualisiert. Es wird dazu je Informationskategorie eine Übernahmeentscheidung getroffen, ob die neue hybride Karte jeweils Informationen dieser Informationskategorie aus der ersten hybriden Karte, der zweiten hybriden Karte oder eine Kombination von Informationen beider hybrider Karten übernimmt. Die Frage, ob in einer Informationskategorie Informationen übernommen werden, kann auch verneint werden. Dann fehlt in der neuen hybriden Karte die entsprechende Informationskategorie zumindest bereichsweise.

Die Erfindung hat den Vorteil, dass flexibel nur Teile einer Karte aktualisiert werden, d.h. räumlich begrenzte Teilbereiche und/oder nur bestimmte Informationskategorien, während andere Teile unangetastet bleiben. Der Aufwand der neuen Kartierung (Remapping) wird erheblich reduziert, da nur relevante Stellen mit Änderungen neu zu kartieren sind und nicht der gesamte Navigationsbereich. Die in der alten Karte eingetragenen Trajektorien können weiter zum Abfahren des vorgegebenen Wegs genutzt werden, auch wenn sie (inzwischen) rein virtuell sind. Bei einer vollständigen Neukartierung hingegen müssten Spuren physikalisch vorhanden sein, oder das Fahrzeug müsste auf andere Weise wie beispielsweise manuell gesteuert werden. Ebenso gehen in der alten Karte vorgenommene Änderungen, beispielsweise durch Editieren einer virtuellen Spur, nicht verloren. Das Koordinatensystem der alten Karte kann beibehalten werden, so dass gespeicherte Positionen ihr Gültigkeit behalten.

Die erste hybride Karte wird bevorzugt in einem ersten Kartierungsvorgang und/oder die zweite hybride Karte in einem zweiten Kartierungsvorgang zu einem späteren Zeitpunkt erzeugt, wobei bei einem Kartierungsvorgang das Fahrzeug die Spur zumindest teilweise abfährt und die Umgebungskontur der Spur mit einem Konturerfassungssensor aufnimmt. Während der Einlern- oder Referenzfahrt kann die Navigation noch mit einem herkömmlichen Spurführungssystem anhand einer physischen Spur erfolgen. Insbesondere das Nachkartieren, also die Erfassung der zweiten hybriden Karte, kann aber auch längs einer virtuellen Spur erfolgen. Außerdem ist gerade beim Nachkartieren nicht erforderlich, die gesamte Spur abzufahren. Es geht dabei darum, diejenigen Teilbereiche abzufahren, die einer Aktualisierung bedürfen. Ein bevorzugtes Vorgehen beim Kartieren ist in der einleitend schon genannten deutschen Patentanmeldung mit dem Aktenzeichen 10 2019 123 659.2 beschrieben, auf die ergänzend Bezug genommen wird.

In einer sich an die Kartierungen und das Zusammenfügen der ersten und zweiten hybriden Karte anschließenden Betriebsphase navigiert das Fahrzeug mit Hilfe der neuen hybriden Karte. Mit einem Konturerfassungssensor wird eine jeweilige Kontur der Umgebung des Fahrzeugs erfasst. Das ist vorzugsweise derselbe Konturerfassungssensor, der auch beim Kartieren verwendet wurde. Eine Umgebungskontur ist insbesondere eine Punktwolke, im allgemeinen eine 3D-Punktwolke, die aber beispielsweise auf eine Ebene beschränkt und damit effektiv nur eine 2D-Punktwolke sein kann, wie bei einem abstandsmessenden Laserscanner. Anhand der Umgebungskonturen wird wiederholt die eigene Pose des Fahrzeugs bestimmt und so navigiert. Dabei kann eine Pose in bis zu sechs Freiheitsgraden bestimmt werden, mit einer Position und/oder einer Ausrichtung des Fahrzeugs in jeweils einem bis drei Freiheitsgraden.

Die Übernahmeentscheidung wird bevorzugt durch eine Vorgabe je Informationskategorie getroffen, insbesondere durch Auswahl in einer Benutzeroberfläche. In dieser bevorzugten Ausführungsform gibt es eine Festlegung je Informationskategorie, welche Informationen aus der ersten hybriden Karte behalten, durch die zweite hybride Karte ersetzt, aus beiden zusammengesetzt oder womöglich gar nicht in die neue hybride Karte übernommen werden sollen. Diese Vorgabe kann insbesondere parametriert oder beispielsweise über eine Benutzeroberfläche eingegeben werden.

Alternativ wird die Übernahmeentscheidung automatisch getroffen. Dazu werden insbesondere je Informationskategorie programmierte Kriterien oder Regeln verwendet. Ein bevorzugter Regelsatz besagt: Wenn eine Information nur in der ersten oder der zweiten hybriden Karte vorhanden ist, wird sie in die neue hybride Karte übernommen; wenn eine Information in der ersten und zweiten hybriden Karte innerhalb eines Toleranzrahmens übereinstimmt, wird sie aus der ersten hybriden Karte übernommen; wenn eine Information in der zweiten hybriden Karte über einen Toleranzrahmen hinaus von der ersten hybriden Karte abweicht, wird sie aus der zweiten hybriden Karte übernommen. Damit wird der ersten hybriden Karte gerade so lange vertraut, wie sie keine Lücken aufweist oder die Neukartierung keine deutlichen Hinweise gibt, dass die Informationen veraltet sind. Diese Regeln können auch nur teilweise umgesetzt sein.

Die Übernahmeentscheidung ist bevorzugt eine Auswahl, die Umgebungskontur aus der ersten hybriden Karte, der zweiten hybriden Karte, beiden hybriden Karten oder keiner hybriden Karte zu übernehmen. Eine derartige Auswahl wird vorzugsweise für alle Informationen einer Informationskategorie getroffen, also in dieser Ausführungsform für alle Umgebungskonturen, und dies gilt sinngemäß für die weiteren unten zu diskutierenden Informationskategorien. Mit der Auswahl nur der ersten hybriden Karte sollten Umgebungskonturen nicht verändert werden, während die Auswahl nur der zweiten hybriden Karte bedeutet, dass die Umgebungskontur überall überschrieben werden soll, zumindest wo neue Umgebungskonturen erfasst wurden. Eine Auswahl beider hybrider Karten führt zu einer Kombination der Umgebungskonturen. Ist gar keine hybride Karte gewählt, so enthält die neue hybride Karte auch keine Umgebungskonturen. Sie ist dann zum Navigieren nicht mehr geeignet, kann aber für andere Zwecke wie beispielsweise eine Diagnose noch nützlich sein.

Die Übernahmeentscheidung ist bevorzugt eine Auswahl, die zu fahrende Trajektorie aus der ersten hybriden Karte, der zweiten hybriden Karte, beiden hybriden Karten oder keiner hybriden Karte zu übernehmen. Die Auswahl der ersten Karte bedeutet, dass die zu fahrende Trajektorie nicht verändert wird, beispielsweise, weil sie von Hand editiert wurde und möglicherweise die physische Spur, aus der sie hervorging, beschädigt oder gar nicht mehr vorhanden ist. Die Auswahl der zweiten hybriden Karte modifiziert die bisherige Trajektorie zumindest in den neu aufgenommenen Bereichen. Bei Auswahl beider Karten wird in überlappenden Abschnitten eine gemeinsame Trajektorie bestimmt. Erneut kann auch keine hybride Karte gewählt werden, somit dann die neue hybride Karte keine Spur oder Trajektorie mehr enthält, die dann beispielsweise noch in weiteren Schritten hinzugefügt wird.

Die hybride Karte weist bevorzugt als Informationskategorie Reflektorpositionen und/oder Zusatzcodes, insbesondere Positionscodes auf. Bisher wurden nur eine erste Informationskategorie und eine zweite Informationskategorie konkret genannt, nämlich Spur beziehungsweise Trajektorie und Umgebungskontur. Eine mögliche dritte und/oder vierte Informationskategorie betrifft nun Reflektoren und die einleitend schon genannten Zusatzcodes. Reflektoren sind im Prinzip Teil der Umgebungskontur, jedoch mit besonders verlässlicher Erfassung und in der Regel auch besonders gut bekannten Positionen. Zusatzcodes enthalten im allgemeinen irgendeine Information für das Fahrzeug. Besonders bevorzugt werden dadurch sichere absolute Positionen erfasst, mit denen die Karte und die spätere Navigation immer wieder sicher verankert werden kann.

Die Übernahmeentscheidung ist bevorzugt eine Auswahl, die Reflektorpositionen aus der ersten hybriden Karte, der zweiten hybriden Karte, beiden hybriden Karten oder keiner hybriden Karte zu übernehmen. Diese Auswahl ist ganz ähnlich zu verstehen wie oben bei der Umgebungskontur. Der Unterschied ist, dass die Reflektorpopulation in der Regel absichtlich verändert wurde, um die Navigation zu unterstützen. Es ist jedoch durchaus auch umgekehrt vorstellbar, dass Reflektoren degradieren, verdeckt oder beschädigt werden oder ohne gezielte Maßnahme verloren gehen. Um der tatsächlichen Situation gerecht zu werden, kann es sinnvoll sein, die Reflektoren der ersten hybriden Karte zu behalten, nur die neuen Reflektoren der zweiten hybriden Karte zu übernehmen, alle Reflektoren beider Karten zu kombinieren oder gar keine Reflektoren in der neuen hybriden Karte zu berücksichtigen.

Die Übernahmeentscheidung ist bevorzugt eine Auswahl, die Zusatzcodes aus der ersten hybriden Karte, der zweiten hybriden Karte, beiden hybriden Karten oder keiner hybriden Karte zu übernehmen. Die Übernahme von Zusatzcodes der ersten hybriden Karte ist besonders dann sinnvoll, wenn die ursprünglichen Zusatzcodes beschädigt wurden oder gar nicht mehr existieren. Umgekehrt sollen möglicherweise nur die Informationen der nun vorhandenen Zusatzcodes verwendet werden, und dazu wird nur die zweite hybride Karte ausgewählt. Die Zusatzcodes beider hybrider Karten können kombiniert werden. Schließlich ist denkbar, Zusatzcodes zwar beim Kartieren und Zusammenfügen zu nutzen, dann aber nicht in die neue hybride Karte zu übernehmen, etwa weil im Navigationsbetrieb gar kein entsprechende Codeleser vorgesehen ist.

Zusatzcodes werden bevorzugt einer Position längs der Spur zugeordnet. Beim Kartieren werden die Zusatzcodes mit einem Codeleser erfasst, der nur einen gewissen Erfassungsbereich aufweist. Diese Codeleser könnte für virtuelle Zusatzcodes bei der Navigation emuliert werden. Stattdessen ist es robuster, den Zusatzcodes eine Koordinate längs der Spur zuzuweisen. Die Spur bildet ja gleichsam ein eindimensionales Koordinatensystem für die Position des Fahrzeugs. Nach dieser bevorzugten Ausführungsform hängt es nicht von der geschätzten Ausrichtung des Fahrzeugs oder dem Lesebereich eines virtuellen Codelesers ab, ob und wann ein Zusatzcode als erfasst gilt. Eine Absolutposition eines Zusatzcodes wird bei der Zuordnung einer Spurkoordinate vorzugsweise entsprechend versetzt, wenn der Zusatzcode nicht auf der Spur lag. Gleichwertig dazu, den Zusatzcode in dieser Weise auf die Spur zu ziehen, ist ein virtueller Codeleser, für den ein Zusatzcode als erfasst gilt, sobald eine Linie senkrecht zur Spur den Zusatzcode überstrichen hat.

Die erste hybride Karte und die zweite Karte sind bevorzugt als Graphen repräsentiert, und die neue hybride Karte wird aus einer Verschmelzung der Graphen erzeugt. Ein Knoten eines solchen Graphen entspricht einer Position samt zugehörigen Zusatzinformationen, während Kanten relative Positionen zwischen Knoten beschreiben, die aus überlappenden Sensorinformationen bestimmt wurden. Die beiden Graphen und damit die hybriden Karten werden dann an mindestens einem Knoten miteinander verschmolzen, der einer identischen oder sehr ähnlichen Position entspricht. Anschließend wird der gemeinsame Graph vorzugsweise optimiert, und zwar unter Einhaltung der durch die Übernahmeentscheidung gestellten Bedingungen.

Die Übernahmeentscheidung berücksichtigt vorzugsweise die Bedingung, den Graph der ersten hybriden Karte unverändert zu lassen oder verändern zu dürfen. In einer Repräsentation als Graph kommt eine weitere vorteilhafte Bedingung hinzu, die für die Erzeugung der neuen hybriden Karte wahlweise gestellt sein kann oder nicht: Der Graph, der die erste hybride Karte repräsentiert, kann gleichsam eingefroren, somit unverändert in die neue hybride Karte übernommen werden, oder es kann erlaubt werden, dass auch dessen Knoten in eine Optimierung des gemeinsamen Graphen einbezogen werden. Das Erhalten des ursprünglichen Graphen hat den Vorteil, dass die alten Positionen und Koordinaten sich nicht ändern. Ohne diese Bedingung gelingt in der Regel eine bessere Optimierung, allerdings um den Preis, dass sich das Koordinatensystem verändern kann und sich auch Strukturen verformen können.

Die Spur ist bevorzugt eine virtuelle Spur, die insbesondere aus einer physischen Spur eingelernt wird. Anfänglich gibt es demnach eine physische Spur, wie eine optische oder magnetische Spur auf dem Boden. Daraus wird eine virtuelle Spur eingelernt, die demnach nur noch in Form entsprechender Daten existiert. Die virtuelle Spur kann rein virtuell verändert und prinzipiell auch rein virtuell vorgegeben sein, beispielsweise mit Hilfe einer graphischen Benutzeroberfläche auf einem Konfigurationsrechner. Durch Einlernen auf Basis einer physischen Spur wird, wie einleitend schon erklärt, die Umstellung auf eine Navigationslösung mit Konturerfassungssensoren erheblich vereinfacht.

Die spätere Navigation auf der vorgegebenen Trajektorie erfolgt vorzugsweise durch jeweilige Korrekturen der Fahrzeugpose in Richtung auf die Spur. Die konkreten Steueranweisungen, mit denen die Pose so korrigiert wird, entsprechen der Regelung eines herkömmlichen Spurführungssystems mit physischer Spur. Das erleichtert eine Umrüstung noch weiter, da die Fahrzeugsteuerung letztlich dieselben Informationen beziehungsweise Befehle erhält wie zuvor.

In bevorzugter Weiterbildung wird eine Vorrichtung zum Erzeugen einer neuen hybriden Karte für die Navigation eines Fahrzeugs durch Erweitern und/oder Verändern einer ersten hybriden Karte mit einer zweiten hybriden Karte bereitgestellt. Die Vorrichtung weist einen Konturerfassungssensor zur Erfassung einer Umgebungskontur einer Umgebung des Fahrzeugs und eine Steuer- und Auswertungseinheit auf, in der ein erfindungsgemäßes Verfahren implementiert ist. Das Verschmelzen von zwei hybriden Karten zu einer neuen hybriden Karte kann offline erfolgen, daher kann die Steuer- und Auswertungseinheit zumindest teilweise unabhängig vom Fahrzeug vorgesehen sein, beispielsweise in einem nur vorübergehend angeschlossenen Rechner, einem Netzwerk oder einer Cloud. Die Vorrichtung umfasst vorzugsweise einen Spurfolgesensor, um zumindest bei der Kartierung der ersten und/oder zweiten hybriden Karte, möglicherweise auch noch unterstützend bei der späteren Navigation, einer physischen Spur zu folgen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Darstellung eines Fahrzeugs mit Konturvermessungssensor, das entlang einer virtuellen Spur navigiert;
- Fig. 2: eine beispielhafte Karte einer Umgebungskontur sowie der anhand einer Spur vorgegebenen Trajektorie eines Fahrzeugs;
- Fig. 3: eine beispielhafte zweite Karte, mit der die Karte gemäß Figur 2 modifiziert werden soll;
- Fig.4: eine aus den Karten gemäß Figur 2 und 3 zusammengesetzte neu Karte;
- Fig. 5: eine beispielhafte Auswahl, welche Informationskategorien zweier zusammenzufügender Karten jeweils in eine neue Karte übernommen werden sollen;
- Fig. 6: eine beispielhafte Karte zur Illustration hinzugefügter Reflektoren;
- Fig. 7a-b: beispielhafte Karten zur Illustration einer veränderten Umgebungskontur im Ausgangszustand und im modifizierten Zustand der Karten;
- Fig. 8a-b: beispielhafte Karten zur Illustration veränderter Zusatzcodes im Ausgangszustand und im modifizierten Zustand der Karten;
- Fig. 9: eine beispielhafte Karte, der ein neuer Bereich hinzugefügt wird;
- Fig. 10: eine Draufsicht auf ein Fahrzeug mit einem Codeleser beim Vorbeifahren an einem Zusatzcode; und
- Fig. 11: eine Draufsicht ähnlich Figur 10, wobei der Zusatzcode nun auf die Spur gezogen wird beziehungsweise beim Überstreichen mit einer zur Spur senkrechten Linie als gelesen gilt.

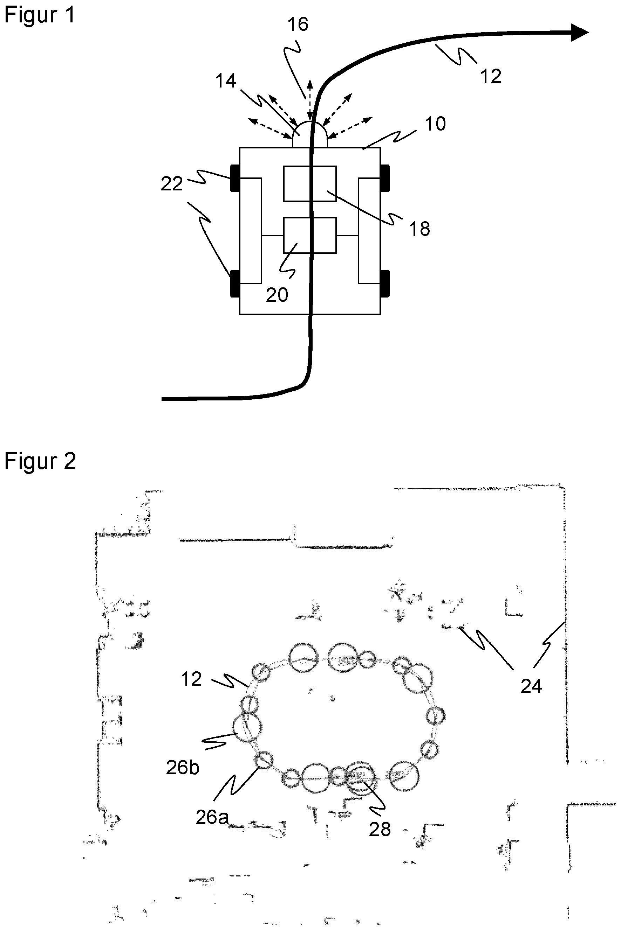

Figur 1 zeigt in einer schematischen Draufsicht ein Fahrzeug 10, das längs einer Spur 12 navigiert. Das Fahrzeug 10 weist einen Konturerfassungssensor 14 auf, der hier als Laserscanner dargestellt ist. Der Laserscanner sendet Scanstrahlen 16 in unterschiedliche Richtungen aus und misst den Abstand zu einem jeweils angetasteten Objektpunkt mit einem Lichtlaufzeitverfahren (TOF, Time of Flight). Alternativ zu einem Laserscanner oder Lidar ist ein anderer Konturerfassungssensor 14 vorstellbar, der beispielsweise auf einer 3D-Kamera, insbesondere Stereokamera, Lichtlaufzeitkamera oder Lichtschnittkamera, einem Radar oder Ultraschall basiert. Mehrere Konturerfassungssensoren 14 können einander für einen größeren Sichtbereich oder Rundumblick ergänzen.

Eine Steuer- und Auswertungseinheit 18 ist mit dem Konturerfassungssensor 14 verbunden, um dessen Konturmessdaten auszuwerten, in einer noch zu beschreibenden Weise in einer Einlernphase eine Karte der Umgebung des Fahrzeugs 10 zu erstellen sowie dann in einer darauffolgenden Betriebsphase anhand der Karte zu navigieren. Die Steuer- und Auswertungseinheit 18 wiederum steht in Kommunikationsverbindung mit einer Fahrzeugsteuerung 20. Die Fahrzeugsteuerung 20 wirkt auf die Räder 22 oder deren Achsen ein, um das Fahrzeug zu beschleunigen, zu bremsen und zu lenken. Umgekehrt kann die Fahrzeugsteuerung 20 von den Rädern 22 auch Sensorinformationen erhalten. Steuer- und Auswertungseinheit 18 kann zumindest teilweise in dem Konturerfassungssensor 14 implementiert sein. Die klare Trennung von Steuer- und Auswertungseinheit 18 und Fahrzeugsteuerung 20 nur beispielhaft zu verstehen. Zumindest Teile der Steuer- und Auswertungseinheit 18 können außerhalb des Fahrzeugs 10 vorgesehen sein, etwa in einem damit drahtlos verbundenen Rechner, einem Netzwerk oder einer Cloud. Auf diese externe Weise kann insbesondere das Erstellen beziehungsweise Modifizieren einer Karte auf Basis von Messdaten des Konturerfassungssensors 14 erfolgen.

Das Fahrzeug 10 navigiert in einer bevorzugten Ausführungsform zunächst in einer Einlernphase mit Hilfe von nicht gezeigten, an sich bekannten Spurführungssensoren, die eine physische Spur 12 erfassen. Dabei ist der Konturerfassungssensor 14 aktiv und erzeugt Konturinformationen der Umgebung der Spur 12, die zu einer Karte kombiniert werden. Im weiteren Betrieb ist dann die physische Spur 12 verzichtbar und durch eine virtuelle Spur 12 ersetzt, die lediglich noch die gewünschte Trajektorie angibt. Die Navigation erfolgt dann anhand einer Lokalisierung des Fahrzeugs 10 mittels eines Abgleichs aktuell mit dem Konturerfassungssensor 14 aufgenommener Konturinformationen und der Karte. Die Steuer- und Auswertungseinheit 18 kann auch anhand der virtuellen Spur 12 und der Konturinformationen für die Fahrzeugsteuerung 20 gleichartige Steuerungsdaten erzeugen wie zuvor mit dem Spurführungssensor aus der physischen Spur 12. Das hier nur zusammenfassend erläuterte Prinzip eines virtuellen Spurführungssensors mit Erstellen einer Karte und späterer Lokalisierung und Navigation anhand der Karte wird ausführlich in der deutschen Patentanmeldung mit dem Aktenzeichen 10 2019 123 659.2 beschrieben.

Figur 2 zeigt ein Beispiel einer Karte der Kontur 24 in der Umgebung der Spur 12. Eine solche Karte entsteht aus zahlreichen Messungen des Konturvermessungssensors 14 an verschiedenen Positionen längs der Spur 12, wobei die einzelnen Konturen zu der Kontur 24 zusammengesetzt werden.

Obwohl die Erzeugung einer einzelnen Karte als bekannt vorausgesetzt wird und die Erfindung das Zusammensetzen zweier Karten für eine Aktualisierung betrifft (Update, Remapping), ist es für das weitere Verständnis hilfreich, zunächst die einzelnen Schritte einer automatisierten Kartierung kurz vorzustellen. Dieses beispielhafte vorteilhafte Vorgehen ist jedoch durch andere Wege ersetzbar, zu einer Karte mit den entsprechenden Informationen zu kommen.

Während mindestens einer Aufnahme- oder Kartierungsfahrt längs der Spur 12 wird die Eigenbewegung des Fahrzeugs 10 aus den Messdaten des Konturerfassungssensors 14 geschätzt. Die Spur 12 ist in dieser Phase vorzugsweise noch physisch vorhanden und wird von mindestens einem Spurerfassungssensor aufgenommen. Etwaige Zusatzcodes längs der Spur 12 werden mit einem Codeleser gelesen. Die erfassten Konturen, Spuren und Codedaten werden vorverarbeitet und gespeichert. Anhand der geschätzten Eigenbewegung werden die Daten in einer Karte angeordnet.

Dabei summieren sich jedoch Fehler in der Schätzung der Eigenbewegung über die Zeit auf, und dadurch entstehen Inkonsistenzen in der Karte. Eine Möglichkeit, solche Fehler zu korrigieren, bieten bereits besuchte Positionen, die das Fahrzeug 10 erneut überfährt, sogenannte Loop-Closures. Besonders vorteilhaft sind Loop-Closures an Positionen mit einem Zusatzcode, der die entsprechende Absolutposition enthält und somit einen verlässlichen Ankerpunkt bildet.

Eine besonders vorteilhafte Repräsentation der Karte ist ein Graph, dessen Knoten Positionen und dessen Kanten Verbindungen längs der Spur 12 sind. In Figur 2 sind zwei verschiedene Arten von Knoten in unterschiedlichen Größen dargestellt. An kleinen Knoten 26a sind zu der Position Referenzkonturen gespeichert. Diese dienen beim Navigieren dazu, durch Scan-Matching mit aktuell aufgenommenen Konturen die geschätzte Eigenposition zu korrigieren. An großen Knoten 26b sind keine Referenzkonturen gespeichert. Jedoch können an allen Knoten 26a-b auch Daten zu der Spur 12 und dort erfassten Zusatzcodes gespeichert sein.

In einer solchen Repräsentation kann eine Graph-basierte Optimierung die Loop-Closures 28 verwenden, um Fehler in der Schätzung der Eigenbewegung zu korrigieren. An der Position eines Loop-Closures 28 werden die jeweiligen Positionen aufeinandergelegt, beziehungsweise falls durch Zusatzcode eine Absolutposition bekannt ist, auf diese Absolutposition verschoben. Diese Verschiebung wird dann durch die Optimierung auf die übrigen Knoten 26a-b verteilt. Bei einer Bewegung eines Knotens 26a-b werden angehängte Kontur-, Spur- und Codedaten mitbewegt.

Zur weiteren Verbesserung der Karte kann die erfasste Spur 12 nicht lediglich in die Karte eingetragen, sondern auch algorithmisch verwendet werden. Mehrfach erfasste Spuren 12, sei es aus mehreren Besuchen derselben Position oder durch die Verwendung multipler Spurführungssensoren, werden aufeinander gezogen beziehungsweise zu einer einzigen Spur 12 vereint. Auch mehrfach gelesene Zusatzcodes werden an einer Position vereinigt.

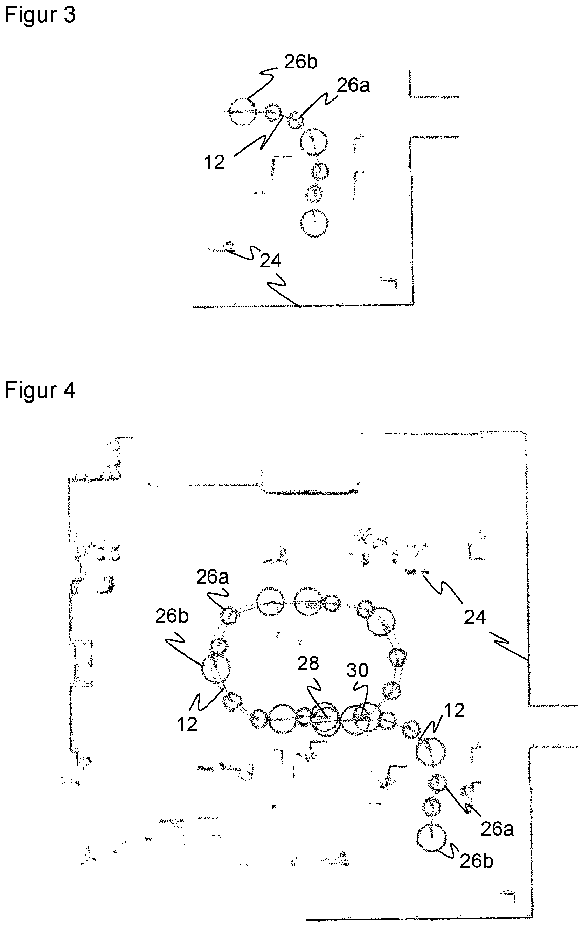

Figur 3 zeigt eine zweite Karte, die beispielsweise zu einem späteren Zeitpunkt mit dem zu Figur 2 erläuterten Kartierungsverfahren aufgenommen wird. Die zweite Karte wird aufgenommen, um die ursprüngliche Karte gemäß Figur 2 an Veränderungen in der Navigationsumgebung oder im Fahrweg anzupassen, oder um neue Bereiche zu erschließen.

Figur 4 zeigt eine neue Karte als Kombination aus der ersten, ursprünglichen Karte gemäß Figur 2 und der zweiten, zusätzlich aufgenommenen Karte gemäß Figur 3. Die Vereinigung erfolgt vorzugsweise anhand der Repräsentation als Graph, könnte aber auch auf andere Weise umgesetzt sein. Um zwei Graphen miteinander zu kombinieren oder zu verschmelzen, muss eine Verbindung durch mindestens eine Kante geschaffen werden. Das erfolgt vorzugsweise bei einem Loop-Closure 30 in einem überlappenden Bereich. Ein passendes Loop-Closure 30 wird, wie schon zuvor ein Loop-Closure 28 für die Fehlerkorrektur bei der Aufzeichnung einer einzelnen Karte, vorzugsweise automatisch gefunden, wobei Zusatzcodes und/oder Messungen der Spur 12 zur Hilfe genommen werden können, aber auch eine händische Vorgabe etwa in einer grafischen Benutzeroberfläche ist vorstellbar.

Die beiden verbundenen Graphen können nun wie oben zu Figur 2 beschrieben als einzelner Graph optimiert werden. Die Betrachtung nur des Falles, dass zwei Graphen miteinander verschmolzen werden, erfolgt ohne Beschränkung der Allgemeinheit. Beliebig viele Graphen - und damit auch Karten - können entsprechend behandelt werden, insbesondere durch hintereinander ausgeführte paarweise Verschmelzungen.

Prinzipiell ist denkbar, sämtliche Informationen der kombinierten Karte gemeinsam zu optimieren. Dann werden alle alten und neuen Informationen in einer möglichst genauen neuen Karte zusammengetragen. Erfindungsgemäß soll aber die Möglichkeit geschaffen werden, eine gezielte Übernahmeentscheidung zu treffen, so dass die Kartenaktualisierung nur einen Teil der Karte betreffen. Damit ist nicht nur eine örtliche Beschränkung gemeint, obwohl dies denkbar ist. Die hier verwendeten Karten sind sogenannte hybride Karten, weil sie mehrere unterschiedliche Informationskategorien umfassen. Es soll möglich sein, je Informationskategorie zu entscheiden, wie die Informationen aus den beiden Ausgangskarten in die neue Karte übernommen werden.

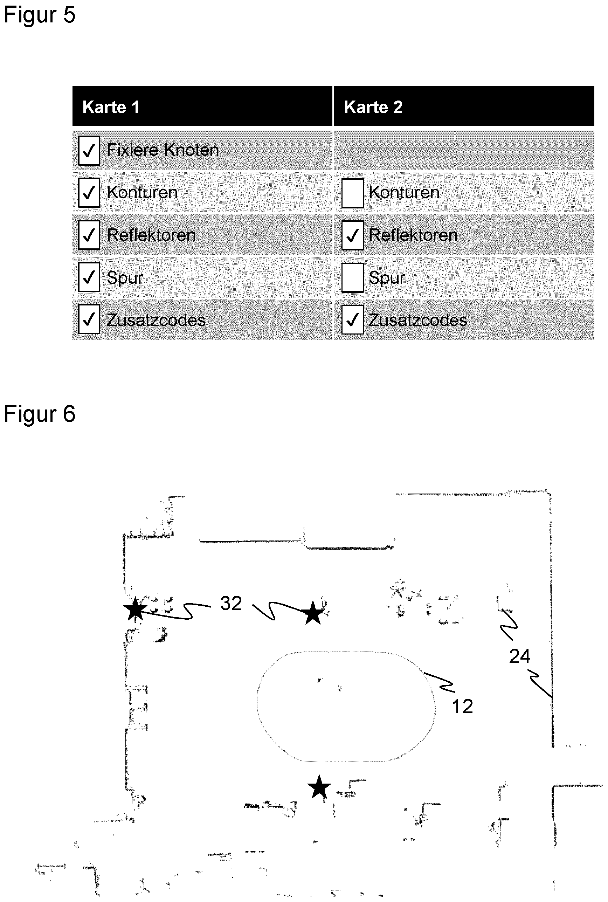

Figur 5 zeigt ein Beispiel, wie sich die Übernahme in den jeweiligen Informationskategorien durch einen Benutzer konfigurieren lässt. Beispielhafte Informationskategorien sind in den Zeilen der Tabelle der Figur 5 gelistet, und durch Anhaken kann festgelegt werden, welche Karte als Quelle in der jeweiligen Informationskategorie verwendet werden soll. Dabei gibt es in den meisten Fällen auch die Möglichkeit, beide Karten zu wählen, wodurch dann Daten oder Informationen aus beiden Karten beziehungsweise Graphen miteinander kombiniert werden, oder keine Karte zu wählen, um die entsprechende Informationskategorie aus der neuen Karte auszuschließen. Die in Figur 5 gesetzten Häkchen sind rein beispielhaft.

Die Informationskategorien gemäß Figur 5 und die Auswirkungen einer jeweiligen Auswahl von Karten innerhalb einer Informationskategorie werden nun näher betrachtet. Dabei ist diese Aufzählung von Informationskategorien als nicht abschließendes Beispiel zu verstehen, wobei insbesondere nicht alle angegebenen Informationskategorien zur Verfügung stehen müssen.

Eine erste Informationskategorie betrifft eine Repräsentation als Graph und fixiert, wenn entsprechend ausgewählt, die Knoten des Graphen der ersten Karte. Einer Optimierung des verschmolzenen Graphen ist demnach verboten, die bereits aus der ersten Karte bekannten Knoten zu verschieben. Dies hat den Vorteil, dass sich bereits bekannte Positionen und das Koordinatensystem der Karte nicht verändern. Damit behalten auch durch den Benutzer gespeicherte Positionen ihre Gültigkeit. Allerdings bleibt zugleich die Chance ungenutzt, frühere Optimierungsfehler in der ersten Karte auszugleichen. Eine entsprechende Wahlmöglichkeit zur Fixierung von Knoten für die zweite Karte ist im Übrigen nicht sinnvoll, da es lediglich verbieten würde, Optimierungsmöglichkeiten zu nutzen, ohne dass dem Vorteile gegenüberstünden, da es in der zweiten Karte keine bisher schon genutzten bekannten Positionen oder Koordinaten gibt.

Werden alternativ die Knoten der ersten Karte freigegeben, so ist lediglich ein Knoten fixiert, um die Konvergenz der Optimierung zu gewährleisten. Alle übrigen Knoten aus beiden Graphen können ihre Positionen verändern. Dadurch kann die Karte verformt oder an eine andere Position im Koordinatensystem bewegt werden. Das Koordinatensystem der neuen Karte passt somit nicht mehr zur ursprünglichen ersten Karte, und dies je nach Situation nicht lediglich in Form eines Versatzes, sondern sogar einer Verformung von Strukturen. Wenn jedoch beispielsweise der Benutzer nicht auf die metrischen Positionen angewiesen ist, etwa weil lediglich dem durch die Spur 12 vorgegebene Fahrweg gefolgt werden soll, so werden mehr Freiheiten für die Optimierung geschaffen, um Fehler zu korrigieren. Es entsteht eine genauere neue Karte, in der unter Umständen sogar frühere Fehler der ersten Karte aus den zusätzlichen Informationen der zweiten Karte verringert werden. In diesem Modus können Karten aus einzelnen Teilstücken zusammengesetzt werden, was sich nutzen lässt, um die Kartierung in mehreren getrennten Aufnahmefahrten durchzuführen, statt den vollständigen Parcours in einem Stück abfahren zu müssen.

Eine zweite Informationskategorie betrifft die Konturen 24, die von dem Konturerfassungssensor 14 aufgenommen wurden. Die Konturen 24 werden vorzugsweise unabhängig von der Auswahl während der Optimierung noch beibehalten und beispielsweise für die Suche nach Loop-Closures 28, 30 verwendet. Abschließend in die neue Karte übernommen werden sie jedoch gemäß der Auswahl.

Sind Konturen 24 nur aus der ersten Karte gewählt, so werden die neuen Vermessungen von Konturen 24 der zweiten Karte ignoriert. Beispielsweise ist die zweite Karte deshalb aufgenommen worden, weil sich die Spur 12 beziehungsweise die zu fahrende Trajektorie verändert hat oder Zusatzcodes verändert wurden. Die Konturen 24 selbst haben sich jedoch für die Lokalisierung bewährt und wurden eventuell schon manuell bearbeitet, so dass diesbezüglich keine Änderung gewünscht ist. Umgekehrt können Konturen nur aus der zweiten Karte gewählt sein. Dann haben sich die Strukturen in der Umgebung deutlich verändert, etwa weil Regale oder Stellwände umgestellt wurden, so dass die ursprünglichen Konturen 24 nicht mehr gut für die Lokalisierung geeignet sind.

Konturen 24 aus beiden Karten in die neue Karte zu übernehmen ist beispielsweise sinnvoll, wenn der kartierte Bereich erweitert wurde, also neue Bereich zugänglich wurden. Soll die neue Karte gar keine Konturen 24 enthalten, so ist diese Karte für eine Navigation nur noch sehr begrenzt verwendbar, da kein Abgleich für eine Korrektur der Lokalisierung mehr möglich ist. Möglicherweise will aber der Benutzer lediglich Spuren 12 oder Zusatzcodes in eine CAD-Zeichnung übernehmen oder dergleichen, wofür die Option angeboten wird.

Eine dritte Informationskategorie betrifft Reflektoren. Solche Reflektoren werden überall oder an besonders kritischen Stellen angebracht, um durch besonders verlässliche Erfassung durch den Konturerfassungssensor 14 die Navigation weiter zu unterstützen. Im Prinzip können daher Reflektoren als Teil der Kontur 24 verstanden werden, so dass die Erläuterungen weitgehend übertragbar sind. Reflektorinformationen werden vorzugsweise unabhängig von der Auswahl während der Optimierung beispielsweise für die Suche nach Loop-Closures 28, 30 verwendet. Die Auswahl legt dann fest, in welcher Form sie abschließend in die neue Karte übernommen werden.

Sind Reflektoren nur der ersten Karte gewählt, so werden etwaige mit der zweiten Karte zusätzlich erfasste Reflektoren ignoriert. Das ist dann sinnvoll, wenn die Änderungen, derentwegen die Karte aktualisiert wird, die Konturen 24, die Spur 12 und/oder Zusatzcodes betrifft, sich jedoch die bisherigen Reflektorpositionen bewährt haben und womöglich schon manuell bearbeitet wurden. Sind umgekehrt nur Reflektoren der zweiten Karte gewählt, so werden die bisherigen Reflektoren der ersten Karte verworfen und durch die neuen Reflektoren der zweiten Karte ersetzt. Beispielsweise ist die Reflektorpopulation stark verändert worden, indem sowohl alte Reflektoren entfernt als auch neue Reflektoren aufgehängt wurden. Vorzugsweise ist die zweite Karte in einer Weise aufgenommen worden, dass alle aktuell vorhandenen Reflektoren erfasst werden konnten.

Sind Reflektoren beider Karten angewählt, so werden alle bekannten Reflektoren übernommen und überlappende Erfassungen desselben Reflektors verschmolzen. Beispielfälle sind eine Erweiterung des Navigationsbereichs oder das Anbringen zusätzlicher Reflektoren an bestimmten Stellen, um dort die Lokalisierung zu verbessern. Auch hinsichtlich der Reflektoren besteht die Möglichkeit, sie gar nicht in die neue Karte einzufügen. Ein Grund dafür könnte sein, dass es zu viele Fehlmessungen von Reflektoren gibt, beispielsweise, weil Arbeiter in der Umgebung Reflektorbänder tragen.

Eine vierte Informationskategorie betrifft die Spur 12 beziehungsweise den davon vorgegebenen Fahrweg oder die Trajektorie des Fahrzeugs 10. Wiederum werden Daten der Spur 12 in der Optimierung vorzugsweise unabhängig von der Auswahl noch benutzt, etwa um wie oben zu Figur 2 beschrieben mehrfach erfasste Spuren 12 übereinanderzulegen.

Bei Auswahl nur der ersten Karte bleibt die Fahrbahn unverändert. Die Änderungen, die eine Aktualisierung der Karte erforderten, betreffen demnach nicht die vorgesehene Trajektorie. Möglicherweise ist die Spur 12 physikalisch schon gar nicht mehr vorhanden und daher nur auf diesem Wege zu bewahren, oder der Fahrweg wurde manuell nachbearbeitet. Wird umgekehrt nur die zweite Karte als Quelle der neuen Spur 12 gewählt, so hat sich die gewünschte Fahrbahn verändert, und die alten Wege sollen nur insoweit noch befahren werden, wie das auch aktuell in der zweiten Karte noch vorgegeben wird. Für diese Option sollten alle neuen Wege abgefahren und somit in der zweiten Karte erfasst worden sein.

Werden beide Karten als Quelle der neuen Spur zugelassen, so werden sämtliche Spurdaten übernommen. Überlappende Spuren werden zu einer einzigen Spur zusammengefasst, ähnlich wie oben zu Figur 2 innerhalb der Optimierung einer einzelnen Karte beschrieben. Ein typischer Anwendungsfall ist hier wieder eine Bereichserweiterung. Denkbar ist auch, dass im schon von der ersten Karte erfassten Bereich neue Spuren 12 platziert wurden, bei der Aufnahme der zweiten Karte aber nicht alle bisherigen Spuren 12 abgefahren wurden, insbesondere weil das gar nicht mehr möglich war und die entsprechende Spure 12 physisch gar nicht mehr vorhanden ist. Es besteht auch die Option, keine Spuren 12 in die neue Karte zu übernehmen, beispielsweise, weil das Fahrzeug 10 frei navigieren soll. Es wird auch hier eine bessere Karte erzeugt, wenn Spuren 12 die Fahrwege wenigstens bei der Kartierung vorgeben und zunächst zur Optimierung noch zur Verfügung stehen.

Eine fünfte Informationskategorie betrifft Zusatzcodes. Auch Zusatzcodes können unabhängig von der Auswahl während der Optimierung genutzt werden, insbesondere um Loop-Closures 28, 30 zu erkennen und zu lokalisieren. Allerdings ist zu beachten, dass aus der ersten Karte bekannte Zusatzcodes möglicherweise nicht vorhanden oder verschoben worden sind.

Bei der Auswahl von Zusatzcodes nur der ersten Karte haben sich deren Positionen nicht verändert. Möglicherweise sind zumindest einige Zusatzcodes physisch gar nicht mehr vorhanden, sondern werden nur noch virtuell verwendet. Umgekehrt werden bei Auswahl von Zusatzcodes nur der zweiten Karte sämtlich bisher bekannten Zusatzcodes der ersten Karte verworfen. Es sollte darauf geachtet werden, dass die zweite Karte sämtliche noch relevanten Zusatzcodes umfasst.

Eine Kombination von Zusatzcodes aus beiden Karten übernimmt sämtliche nur in einer Karte erfassten Zusatzcodes. Werden Zusatzcodes in beiden Karten an sehr nahen Positionen erfasst, oder handelt es sich um eindeutige Zusatzcodes, die in beiden Karten vorkommen, so werden sie vorzugsweise in der neuen Karte verschmolzen, beziehungsweise die Karten werden in einer Weise vereinigt, die mit dem doppelt erfassten Zusatzcode verträglich ist. Anwendungsfälle sind die Erweiterung des Navigationsbereichs mit weiteren Zusatzcodes in den neuen Gebieten und/oder das Anbringen weiterer Zusatzcodes in bekannten Bereichen, um die Lokalisierung zu unterstützen oder dem Fahrzeug 10 zusätzliche Steuerungsanweisungen zu geben. Die Option, keine Zusatzcodes in die neue Karte zu übernehmen, ist beispielsweise dann sinnvoll, wenn das Fahrzeug 10 überhaupt nicht über einen Codeleser verfügt.

Nach dieser Beschreibung der einzelnen Informationskategorien und der Auswahlmöglichkeiten innerhalb der Informationskategorie zum Vereinigen zweiter Karten wird nun eine Reihe von Beispielen betrachtet. Dabei handelt es sich um besonders praxisrelevante Fälle, in denen eine Aktualisierung der Karte erforderlich oder nützlich ist. Das soll jedoch die möglichen Kombinationen von Auswahlmöglichkeiten nicht einschränken.

Figur 6 zeigt eine beispielhafte Karte zur Illustration hinzugefügter Reflektoren 32. In diesem Anwendungsfall fällt im Navigationsbetrieb auf, dass in bestimmten Bereichen die Lokalisierung unzuverlässig ist. Als Gegenmaßnahme werden die zusätzlichen Reflektoren 32 angebracht.

Eine vorteilhafte Auswahl gemäß Figur 5 ist hier: Fixiere Knoten: Ja; Konturen: Karte 1 Ja, Karte 2 Nein; Reflektoren: Karte 1 Ja, Karte 2 Ja; Spur: Karte 1 Ja, Karte 2 Nein; Zusatzcodes: Karte 1 Ja, Karte 2 Nein.

Mit dieser Auswahl werden die neuen Reflektoren 32 zusätzlich in die neue Karte eingetragen. Soweit schon in der ersten Karte Reflektoren erfasst waren, bleiben sie erhalten. Überlappende Reflektoren aus beiden Karten werden verschmolzen. In den übrigen Informationskategorien bleibt die erste Karte unangetastet.

In diesem Beispiel wird gleich die neue Karte dargestellt. Dem liegt eine Vereinigung einer ursprünglichen ersten Karte ohne die Reflektoren 32 und einer zweiten Karte mit zumindest denjenigen Ausschnitten zugrunde, in denen die Reflektoren 32 erfasst sind.

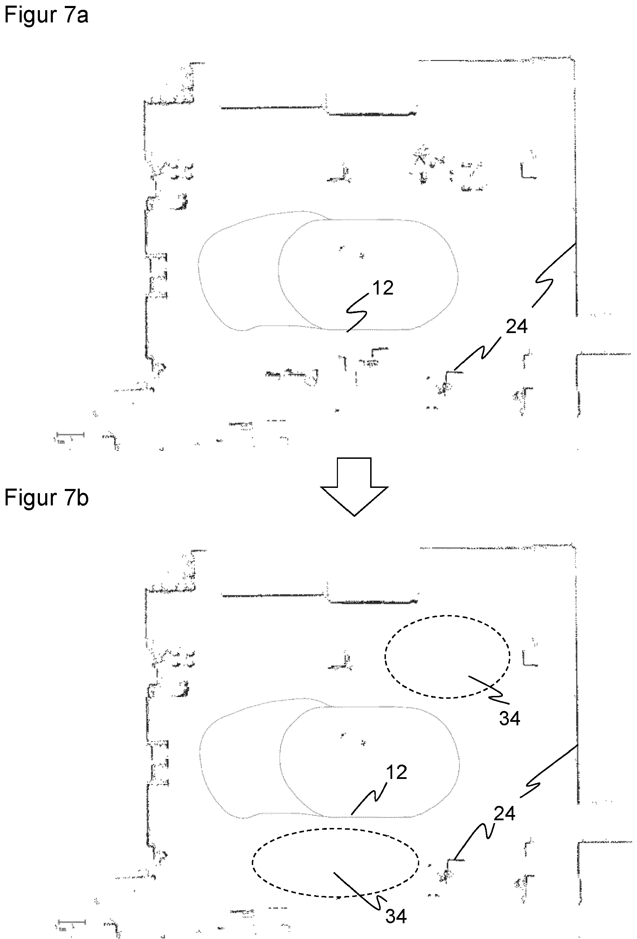

Die Figuren 7a-b zeigen Karten, die einen Anwendungsfall mit veränderter Umgebung oder Kontur 24 illustrieren. Dabei zeigt Figur 7a die ursprüngliche erste Karte und Figur 7b die neue Karte nach Vereinigung mit einer zweiten Karte.

Hier sind die Spuren 12 bereits kartiert oder sogar manuell editiert, beispielsweise indem der linke Bogen als virtuelle Spur hinzugefügt wurde. Dann hat sich jedoch die Umgebung derart verändert, dass kein zuverlässiger Abgleich mit der bisherigen Karte mehr möglich ist. Deshalb soll die Umgebung neu kartiert werden, aber die Fahrwege sollen bestehen bleiben. Bei einer vollständigen Neukartierung würde insbesondere ein manuell hinzugefügter Teil des Fahrwegs verschwinden.

Eine vorteilhafte Auswahl gemäß Figur 5 ist hier: Fixiere Knoten: Ja; Konturen: Karte 1 Nein, Karte 2 Ja; Reflektoren: Karte 1 Nein, Karte 2 Ja; Spur: Karte 1 Ja, Karte 2 Nein; Zusatzcodes: Karte 1 Ja, Karte 2 Nein.

Damit bleiben die Spuren 12 und Zusatzcodes der ersten Karte erhalten, während die veränderte Umgebung in Kontur 24 und Reflektoren neu aufgenommen wird. Die Auswahl hinsichtlich der Zusatzcodes könnte innerhalb dieses Anwendungsfalls variiert werden, je nachdem, ob sich diesbezüglich in der Navigationsumgebung etwas verändert hat oder nicht. Im dargestellten Beispiel der Figur 7b beschränkt sich die Veränderung der Umgebung darauf, dass einige Konturen in den Bereichen 34 verschwunden sind.

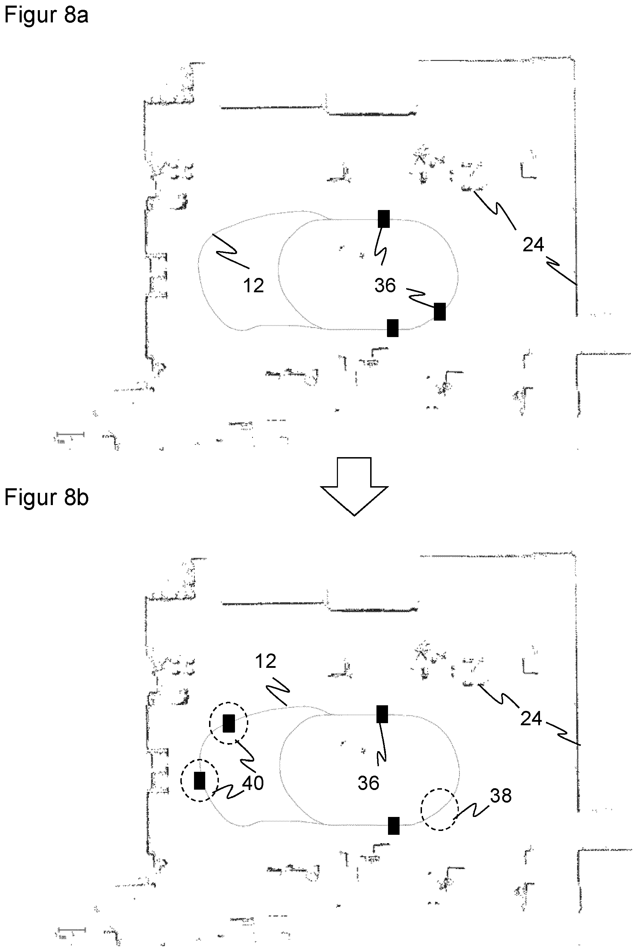

Die Figuren 8a-b zeigen Karten, die einen Anwendungsfall mit veränderten Zusatzcodes 36 illustrieren. Es wurden also Zusatzcodes 36 an einigen Stellen 38 entfernt, an anderen Stellen 40 neu angebracht oder verschoben. Wiederum zeigt Figur 8a die ursprüngliche erste Karte und Figur 8b die neue Karte nach Vereinigung mit einer zweiten Karte.

In diesem Anwendungsfall soll die erste Karte weitgehend unverändert bleiben, jedoch sollen die Zusatzcodes 36 neu erfasst und eingetragen werden, wobei hier beispielhaft angenommen wird, dass die Veränderungen in den Zusatzcodes 36 so gravierend waren, dass die bisherige diesbezügliche Information gar nicht mehr verwendbar ist.

Eine vorteilhafte Auswahl gemäß Figur 5 ist hier: Fixiere Knoten: Ja; Konturen: Karte 1 Ja, Karte 2 Nein; Reflektoren: Karte 1 Ja, Karte 2 Nein; Spur: Karte 1 Ja, Karte 2 Nein; Zusatzcodes: Karte 1 Nein, Karte 2 Ja.

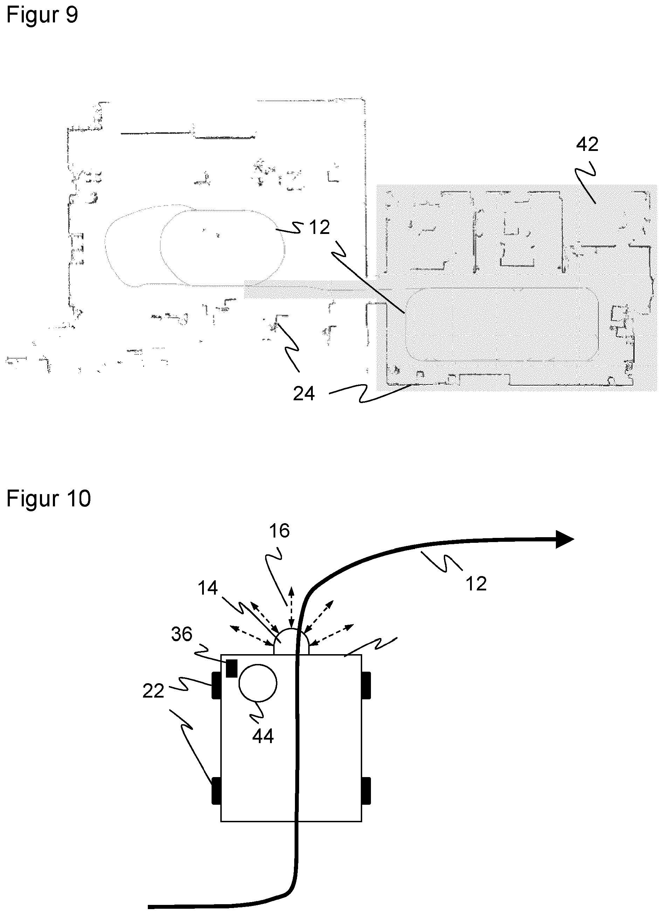

Figur 9 zeigt eine Karte, bei der eine bestehende erste Karte um einen neuen Bereich 42 erweitert werden soll, ohne den schon bekannten Bereich neu zu kartieren. Dargestellt ist nur die neue Karte, wobei der mittels der zweiten Karte hinzugefügte Bereich 42 zur Veranschaulichung grau hinterlegt wurde.

Eine vorteilhafte Auswahl gemäß Figur 5 schließt hier alle Informationskategorien ein, also Fixiere Knoten: Ja; Konturen: Karte 1 Ja, Karte 2 Ja; Reflektoren: Karte 1 Ja, Karte 2 Ja; Spur: Karte 1 Ja, Karte 2 Ja; Zusatzcodes: Karte 1 Ja, Karte 2 Ja.

Bei dieser Auswahl wird unterstellt, dass es praktisch nicht zu Konflikten zwischen den Informationen der beiden Karten kommt, weil die Karten unterschiedliche Gebiete abdecken. Genau das war ja das Ausgangsszenario, in dem verhindert werden sollte, dass die zweite Karte das Gebiet der ersten Karte nochmals erfasst.

Ohne eigene Darstellung in einer Figur soll noch ein weiterer Anwendungsfall diskutiert werden. Dabei geht es darum, dass eine erste Karte mit einer anderen Sensorkonfiguration, insbesondere einem anderen Konturerfassungssensor 14 aufgenommen wurde, als sie nun das Fahrzeug 10 zum Navigieren nutzen wird. Insbesondere sollen mehrere Fahrzeuge 10 zumindest Teile einer Karte gemeinsam verwenden können. Die Erfassung von Konturen 24 und auch Reflektoren 32 unterscheidet sich von Sensorkonfiguration zu Sensorkonfiguration, so dass diesbezüglich das Fahrzeug 10 eine Karte benötigt, die zu der aktuellen Sensorkonfiguration passt. Die Unterschiede sind allerdings für das menschliche Auge recht subtil, weshalb hier auf Beispielbilder verzichtet wurde.

In die erste Karte, die mit einer anderen Sensorkonfiguration aufgenommen wurde, wurde aber möglicherweise schon viel Arbeit in Form von manueller Bearbeitung investiert. Deshalb besteht der Wunsch, diesen Stand für alle betroffenen Fahrzeuge 10 zu erhalten. Nur die eigentlichen Sensordaten, d.h. die Kontur 24 und gegebenenfalls die Reflektoren 32, sollen ausgetauscht werden. Das Koordinatensystem samt bekannten Positionen, die Trajektorien und die Zusatzcodes 36 sollen nicht modifiziert werden.

Eine mögliche Auswahl gemäß Figur 5 ist hier: Fixiere Knoten: Ja; Konturen: Karte 1 Nein, Karte 2 Ja; Reflektoren: Karte 1 Nein, Karte 2 Ja; Spur: Karte 1 Ja, Karte 2 Nein; Zusatzcodes: Karte 1 Ja, Karte 2 Nein.

Diese Auswahl entspricht derjenigen, die zu Figur 7a-b bei veränderter Umgebung vorgestellt wurde, hier aber mit einer anderen Ausgangssituation und einer anderen Aufnahme der zweiten Karte nun durch eine veränderte Sensorkonfiguration.

Die in Figur 5 illustrierte Auswahl ist nur ein Beispiel. Die Benutzerschnittstelle, in denen die Vorgaben zu den Informationskategorien gewählt werden, kann jede beliebige Form annehmen. Vorzugsweise wird beim Aufnehmen der zweiten Karte beziehungsweise beim Zusammenfügen eine Live-Ansicht angeboten, mit der ein Benutzer mitverfolgen kann, ob alle relevanten Daten aufgenommen beziehungsweise wie gewünscht übernommen werden. Gegebenenfalls kann der Benutzer eingreifen und die zweite Karte erweitern beziehungsweise seine Auswahl der zu übernehmenden Daten verändern.

Es ist auch vorstellbar, dass das System selbstständig entscheidet, welche Daten aus welcher Karte übernommen werden, um den manuellen Aufwand zu reduzieren. Beispielsweise können ähnliche oder nur einmal vorhandene Daten beibehalten beziehungsweise verschmolzen werden, während bei widersprüchlichen Daten der neueren Aufnahme Vorrang gegeben wird.

Figur 10 illustriert anhand einer Draufsicht auf ein Fahrzeug 10 ein Problem, das bei der Erfassung von Zusatzcodes 36 auftreten kann. Es wurde schon erläutert, dass die Zusatzcodes 36 vorzugsweise bei der Kartierung mit einem Codeleser erfasst werden. Im anschließenden Navigationsbetrieb müssen die Zusatzcodes 36 nicht mehr physisch präsent sein, sondern werden in einigen Ausführungsformen durch virtuelle Zusatzcodes 36 ersetzt. Damit die Steueranweisungen der virtuellen Zusatzcodes 36 befolgt werden, wird ein virtueller Codeleser implementiert, der das Verhalten des physischen Codelesers emuliert.

Um eine möglichst genaue Steuerung und Bestimmung des Streckenabschnitts zu gewährleisten, sollte der Lesebereich 44 des Codelesers klein sein, beispielsweise 15 cm breit. Ansonsten wird die Lokalisierung unpräzise. Andererseits kann es bei einem kleinen Lesebereich 44 passieren, dass der Codeleser durch zufällige Schwankungen in der Spurregelung den Zusatzcode 36 nicht genau genug überfährt und somit nicht lesen kann. Dadurch kann es Fehlsteuerungen geben. Je nach Technologie des Codelesers und zugehörigem Zusatzcode 36 kann es auch aus anderen Gründen dazu kommen, dass Codeinformation des Zusatzcodes 36 nicht erfasst wird. RFID-Tags können durch Reflexionen und Abschirmungen nicht oder falsch lokalisiert werden. Barcodes lassen sich bei ungünstiger Orientierung der Erfassung nicht lesen, in denen die Leselinie nicht alle Codeelemente quert. Optische 2D-Codes können aus zu flachen Perspektiven nicht mehr gelesen werden.

Nun kann natürlich ein virtueller Codeleser diese physischen Beschränkungen der jeweiligen Technologie vermeiden, also nicht mit emulieren. Der Fall, dass mit dem emulierten Lesebereich 44 der Zusatzcode 36 wie in Figur 10 verfehlt wird, ist jedoch durchaus noch möglich.

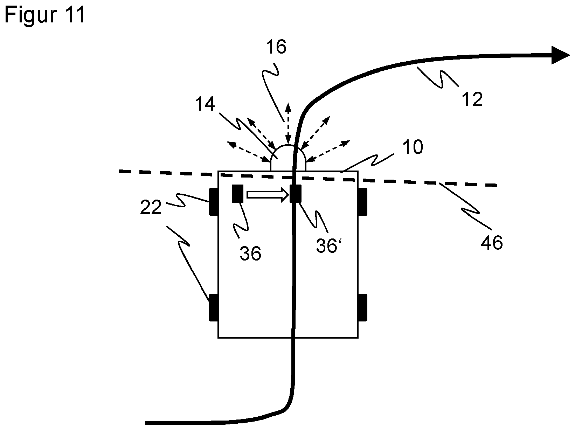

Figur 11 illustriert in einer weiteren Draufsicht auf ein Fahrzeug 10 ein Vorgehen für einen virtuellen Codeleser, das die Problematik mit einem nicht ausreichend genau ausgerichteten Lesebereich 44 vermeidet. Tatsächlich sind sogar zwei alternative Lösungsmöglichkeiten gezeigt.

Eine erste Möglichkeit besteht darin, die erfassten Zusatzcodes 36 als virtuellen Zusatzcode 36' auf die Spur 12 zu ziehen. Ein in dem Zusatzcode 36 codierter Steuerbefehl soll zu dem Zeitpunkt umgesetzt werden, zu dem der Zusatzcode 36 erfasst wird. Das wiederum entspricht einer bestimmten Position längs der Spur 12. Daher kann die Position des Codes neu zugeordnet werden, und zwar auf nur eine Koordinate entsprechend der Position längs der Spur 12. Sofern der Zusatzcode 36 eine Absolutposition codiert, wird diese für den virtuellen Zusatzcode 36 entsprechend dem Versatz zur Spur 12 korrigiert. Der virtuelle Zusatzcode 36' gilt als gelesen, wenn das Fahrzeug 10 die entsprechende Position auf der Spur 12 erreicht.

Eine mathematisch im Prinzip gleichwertige alternative Möglichkeit sieht vor, das rechteckige oder kreisförmige, eng begrenzte ursprüngliche Lesebereich 44 in dem virtuellen Codeleser durch eine virtuelle Messlinie 46 zu ersetzen, die jeweils senkrecht zu der Spur 12 angeordnet wird. Sobald die virtuelle Messlinie 46 den Zusatzcode 36 an dessen in der Karte eingelernter Position überstreicht, gilt der Zusatzcode 36 als gelesen, und dessen Steuerbefehl wird ausgeführt. Die virtuelle Messlinie 46 leistet letztlich nichts anderes, als die Position des Zusatzcodes 36 auf eine entsprechende Position auf der Spur 12 zu projizieren. Anstelle einer virtuellen Messlinie 46 könnte auch ein Rechteck mit der Breite der virtuellen Messlinie 46 als Lesebereich 44 verwendet werden.

Die Ausdehnung der virtuellen Messlinie 46 ist in etwa auf die Breite des Fahrzeugs 10 zu begrenzen, da sonst womöglich auch Zusatzcodes 36 berücksichtigt würden, die nicht zu dem momentan befahrenen Abschnitt der Spur 12 gehören. Entsprechend werden bei der oben beschriebenen ersten Möglichkeit auch nur virtuelle Zusatzcodes 36' auf die Spur 12 gezogen, die ausreichend nahe bei der Spur 12 liegen, dass sie prinzipiell von einem Codeleser erfasst würden.

## Patentansprüche

1. Verfahren zum Erzeugen einer neuen hybriden Karte durch Erweitern und/oder Verändern einer ersten hybriden Karte mit einer zweiten hybriden Karte, wobei eine hybride Karte mehrere Informationskategorien enthält und jeweils für die Informationskategorien eine Übernahmeentscheidung getroffen wird, welche Karte als Quelle in der jeweiligen Informationskategorie verwendet werden soll, ob also in die neue hybride Karte Informationen aus der ersten hybriden Karte oder der zweiten hybriden Karte übernommen werden oder eine Kombination von Informationen beider hybrider Karten übernommen wird oder ob in einer Informationskategorie keine Informationen übernommen werden,
**dadurch gekennzeichnet,**
**dass** die hybride Karte für die durch eine physische oder virtuelle Spur (12) geführte Navigation eines Fahrzeugs (10) in einem Navigationsbereich auf einer durch die Spur (12) vorgegebenen zu fahrenden Trajektorie des Fahrzeugs (10) anhand einer mit einem Konturerfassungssensor (14) aufgenommenen Umgebungskontur verwendet wird, wobei eine Informationskategorie die Spur (12) und eine Informationskategorie die Umgebungskontur (24) der Spur (12) aufweist und dass die Übernahmeentscheidung durch eine festlegende Vorgabe je Informationskategorie getroffen wird.

2. Verfahren nach Anspruch 1,
wobei die erste hybride Karte in einem ersten Kartierungsvorgang und/oder die zweite hybride Karte in einem zweiten Kartierungsvorgang zu einem späteren Zeitpunkt erzeugt wird, wobei bei einem Kartierungsvorgang das Fahrzeug (10) zumindest Teile der Spur (12) abfährt und die Umgebungskontur (24) der Spur (10) mit einem Konturerfassungssensor (14) aufnimmt.

3. Verfahren nach Anspruch 1 oder 2,
wobei die Vorgabe je Informationskategorie durch Auswahl in einer Benutzeroberfläche festgelegt wird.

4. Verfahren nach einem der vorhergehenden Ansprüche,
wobei die Übernahmeentscheidung eine Auswahl ist, die Umgebungskontur (24) aus der ersten hybriden Karte, der zweiten hybriden Karte, beiden hybriden Karten oder keiner hybriden Karte zu übernehmen.

5. Verfahren nach einem der vorhergehenden Ansprüche,
wobei die Übernahmeentscheidung eine Auswahl ist, die zu fahrende Trajektorie (12) aus der ersten hybriden Karte, der zweiten hybriden Karte, beiden hybriden Karten oder keiner hybriden Karte zu übernehmen.

6. Verfahren nach einem der vorhergehenden Ansprüche,
wobei die hybride Karte als Informationskategorie Reflektorpositionen (32) und/oder Zusatzcodes (36), insbesondere Positionscodes aufweist.

7. Verfahren nach Anspruch 6,
wobei die Übernahmeentscheidung eine Auswahl ist, die Reflektorpositionen (32) aus der ersten hybriden Karte, der zweiten hybriden Karte, beiden hybriden Karten oder keiner hybriden Karte zu übernehmen.

8. Verfahren nach Anspruch 6 oder 7,
wobei die Übernahmeentscheidung eine Auswahl ist, die Zusatzcodes (36) aus der ersten hybriden Karte, der zweiten hybriden Karte, beiden hybriden Karten oder keiner hybriden Karte zu übernehmen.

9. Verfahren nach einem der vorhergehenden Ansprüche,
wobei die hybride Karte als Informationskategorie Zusatzcodes (36) aufweist, und wobei Zusatzcodes (36) einer Position längs der Spur (12) zugeordnet werden.

10. Verfahren nach einem der vorhergehenden Ansprüche,
wobei die erste hybride Karte und die zweite Karte als Graphen repräsentiert sind und die neue hybride Karte aus einer Verschmelzung der Graphen erzeugt wird.

11. Verfahren nach Anspruch 10,
wobei die Übernahmeentscheidung die Bedingung berücksichtigt, den Graph der ersten hybriden Karte unverändert zu lassen oder verändern zu dürfen.

12. Verfahren nach einem der vorhergehenden Ansprüche,
wobei die Spur (12) eine virtuelle Spur ist, die aus einer physischen Spur (12) eingelernt wird.

13. Vorrichtung (14, 18) zum Erzeugen einer neuen hybriden Karte für die Navigation eines Fahrzeugs (10) durch Erweitern und/oder Verändern einer ersten hybriden Karte mit einer zweiten hybriden Karte, wobei eine hybride Karte mehrere Informationskategorien enthält und die Vorrichtung einen Konturerfassungssensor (14) zur Erfassung einer Umgebungskontur (24) einer Umgebung des Fahrzeugs (10) und eine Steuer- und Auswertungseinheit (18) aufweist, **dadurch gekennzeichnet,**
**dass** in der Steuer- und Auswertungseinheit (18) ein Verfahren nach einem der vorhergehenden Ansprüche implementiert ist.

## Claims

1. A method for generating a new hybrid map by extending and/or modifying a first hybrid map with a second hybrid map, wherein a hybrid map contains a plurality of information categories and a takeover decision is made for the respective information categories as to which map is to be used as a source in the respective information category, i.e. whether information from the first hybrid map or the second hybrid map is taken over into the new hybrid map or a combination of information from both hybrid maps is taken over or whether no information is taken over in an information category,
**characterized in that** the hybrid map is used for the navigation of a vehicle (10) guided by a physical or virtual trail (12) in a navigation area on a trajectory of the vehicle (10) to be travelled that is predetermined by the trail (12), on the basis of an environment contour recorded by a contour detection sensor (14), wherein one information category comprises the trail (12) and one information category comprises the environment contour (24) of the trail (12), and **in that** the takeover decision is made by a defining specification for each information category.

2. The method according to claim 1,
wherein the first hybrid map is generated in a first mapping process and/or the second hybrid map is generated in a second mapping process at a later time, wherein in a mapping process the vehicle (10) travels along at least parts of the trail (12) and records the surrounding contour (24) of the trail (10) with a contour detection sensor (14).

3. The method according to claim 1 or 2,
wherein the specification per information category is determined by selection in a user interface.

4. The method according to any of the preceding claims,
wherein the takeover decision is a selection to take over the environment contour (24) from the first hybrid map, the second hybrid map, both hybrid maps or no hybrid map.

5. The method according to any of the preceding claims,
wherein the takeover decision is a selection to take over the trajectory (12) to be travelled from the first hybrid map, the second hybrid map, both hybrid maps or no hybrid map.

6. The method according to any of the preceding claims,
wherein the hybrid map comprises reflector positions (32) and/or additional codes (36), in particular position codes, as an information category.

7. The method according to claim 6,
wherein the takeover decision is a selection to take over the reflector positions (32) from the first hybrid map, the second hybrid map, both hybrid maps, or no hybrid map.

8. The method according to claim 6 or 7,
wherein the takeover decision is a selection to take over the additional codes (36) from the first hybrid map, the second hybrid map, both hybrid maps, or no hybrid map.

9. The method according to any of the preceding claims,
wherein the hybrid map comprises additional codes (36) as an information category, and wherein additional codes (36) are assigned to a position along the trail (12).

10. The method according to any of the preceding claims,
wherein the first hybrid map and the second map are represented as graphs and the new hybrid map is generated from a fusion of the graphs.

11. The method according to claim 10,
wherein the takeover decision takes into account the condition of leaving unchanged or being allowed to change the graph of the first hybrid map.

12. The method according to any of the preceding claims,
wherein the trail (12) is a virtual trail taught from a physical trail (12).

13. An apparatus (14, 18) for generating a new hybrid map for the navigation of a vehicle (10) by expanding and/or modifying a first hybrid map with a second hybrid map, a hybrid map containing a plurality of information categories and the device having a contour detection sensor (14) for detecting an environmental contour (24) of an environment of the vehicle (10) and a control and evaluation unit (18),
**characterized in that** a method according to any of the preceding claims is implemented in the control and evaluation unit (18).

## Revendications

1. Procédé de création d'une nouvelle carte hybride par extension et/ou modification d'une première carte hybride avec une deuxième carte hybride, dans lequel une carte hybride contient plusieurs catégories d'informations, et on prend une décision de reprise respective pour les catégories d'informations pour savoir quelle carte doit être utilisée comme source dans la catégorie d'informations respective, donc pour savoir si des informations de la première carte hybride ou de la deuxième carte hybride sont reprises dans la nouvelle carte hybride ou si une combinaison d'informations des deux cartes hybrides est reprise ou si aucune information n'est reprise dans une catégorie d'informations,
**caractérisé en ce que**
la carte hybride est utilisée pour la navigation, guidée par une piste physique ou virtuelle (12), d'un véhicule (10) dans une zone de navigation sur une trajectoire à parcourir du véhicule (10), prédéfinie par la piste (12), à l'aide d'un contour environnant enregistré avec un capteur de détection de contour (14), une catégorie d'informations présentant la piste (12) et une catégorie d'informations présentant le contour environnant (24) de la piste (12), et **en ce que** la décision de reprise est prise par une consigne à définir par catégorie d'informations.

2. Procédé selon la revendication 1,
dans lequel la première carte hybride est créée lors d'un premier processus de cartographie et/ou la deuxième carte hybride est créée lors d'un deuxième processus de cartographie à un moment ultérieur, et lors d'un processus de cartographie, le véhicule (10) parcourt au moins des parties de la piste (12) et enregistre le contour environnant (24) de la piste (10) avec un capteur de détection de contour (14).

3. Procédé selon la revendication 1 ou 2,
dans lequel la consigne par catégorie d'informations est définie par sélection dans une interface utilisateur.

4. Procédé selon l'une des revendications précédentes,
dans lequel la décision de reprise est une sélection de reprendre le contour d'environnement (24) à partir de la première carte hybride, de la deuxième carte hybride, des deux cartes hybrides ou d'aucune carte hybride.

5. Procédé selon l'une des revendications précédentes,
dans lequel la décision de reprise est une sélection de reprendre la trajectoire (12) à parcourir à partir de la première carte hybride, de la deuxième carte hybride, des deux cartes hybrides ou d'aucune carte hybride.

6. Procédé selon l'une des revendications précédentes,
dans lequel la carte hybride contient, en tant que catégorie d'informations, des positions de réflecteur (32) et/ou des codes supplémentaires (36), en particulier des codes de position.

7. Procédé selon la revendication 6,
dans lequel la décision de reprise est une sélection de reprendre les positions de réflecteur (32) à partir de la première carte hybride, de la deuxième carte hybride, des deux cartes hybrides ou d'aucune carte hybride.

8. Procédé selon la revendication 6 ou 7,
dans lequel la décision de reprise est une sélection de reprendre les codes supplémentaires (36) à partir de la première carte hybride, de la deuxième carte hybride, des deux cartes hybrides ou d'aucune carte hybride.

9. Procédé selon l'une des revendications précédentes,
dans lequel la carte hybride contient, en tant que catégorie d'informations, des codes supplémentaires (36), et des codes supplémentaires (36) sont associés à une position le long de la piste (12).

10. Procédé selon l'une des revendications précédentes,
dans lequel la première carte hybride et la deuxième carte sont représentées sous forme de graphes, et la nouvelle carte hybride est créée à partir d'une fusion des graphes.

11. Procédé selon la revendication 10,
dans lequel la décision de reprise tient compte de la condition consistant à laisser inchangé le graphe de la première carte hybride ou à être autorisé à le modifier.

12. Procédé selon l'une des revendications précédentes,
dans lequel la piste (12) est une piste virtuelle apprise à partir d'une piste physique (12).

13. Dispositif (14, 18) pour créer une nouvelle carte hybride pour la navigation d'un véhicule (10) par extension et/ou modification d'une première carte hybride avec une deuxième carte hybride, une carte hybride contenant plusieurs catégories d'informations, et le dispositif comportant un capteur de détection de contour (14) pour détecter un contour environnant (24) d'un environnement du véhicule (10) et une unité de commande et d'évaluation (18),
**caractérisé en ce que**
un procédé selon l'une des revendications précédentes est mis en oeuvre dans l'unité de commande et d'évaluation (18).
